**Europäisches Patentamt**

**European Patent Office**

**Office européen des brevets**

(19)

(11) Veröffentlichungsnummer : **0 318 455 B1**

(12)

# EUROPÄISCHE PATENTSCHRIFT

(45) Veröffentlichungstag der Patentschrift :
**06.05.92 Patentblatt 92/19**

(51) Int. Cl.$^5$ : **E06B 3/48, E06B 5/16**

(21) Anmeldenummer : **88890263.2**

(22) Anmeldetag : **20.10.88**

(54) **Sektionaltor.**

(30) Priorität : **24.11.87 AT 3083/87**

(43) Veröffentlichungstag der Anmeldung :
**31.05.89 Patentblatt 89/22**

(45) Bekanntmachung des Hinweises auf die
Patenterteilung :
**06.05.92 Patentblatt 92/19**

(84) Benannte Vertragsstaaten :
**AT BE CH DE ES FR GB GR IT LI LU NL SE**

(56) Entgegenhaltungen :
**AT-B- 351 736**
**DE-A- 2 604 777**
**FR-A- 2 421 264**
**US-A- 3 017 218**
**US-A- 3 967 671**

(73) Patentinhaber : **LINDPOINTNER TORE
GESELLSCHAFT M.B.H.
Salzburgerstrasse 286
A-4020 Linz (AT)**

(72) Erfinder : **Lindpointner, Helmut
Anemonenweg 18
A-4020 Linz (AT)**

(74) Vertreter : **Hübscher, Heiner, Dipl.-Ing. et al
Spittelwiese 7
A-4020 Linz (AT)**

## Beschreibung

Die Erfindung betrifft ein Sektionaltor nach dem Oberbegriff des Patentanspruches 1.

Sektionaltore, die auch unter der Bezeichnung "Rollschiebetore" oder "Hubgliedertore" bekannt sind, haben bisher bei ortsfestem Einbau ein Anwendungsgebiet vom normalen Garagentor bis zu großen Hallentoren für Gewerbe und Industrie. Es ist möglich, das Gewicht des Tores wenigstens zum Teil durch Federn oder Gewichte abzugleichen und einfache Antriebseinrichtungen für das Tor vorzusehen, die nach einer möglichen Ausführung über Seilzüge auf den Torflügel, die Achsen der Laufrollen oder auf die Befestigungsstellen der Gleitstücke wirken. Das Tor ist in jeder Stellung an den Führungsschienen abgestützt und gehalten. Meist wird eine deckennahe Anordnung der ins Rauminnere reichenden Schenkel der Führungsschienen gewählt, wobei bei kleineren Toren auf die Kopffreiheit Bedacht genommen wird. Bei kleinen und großen Toren ist eine Schienenführung möglich, wegen der das Tor kaum den nutzbaren Innenraum des von ihm abgeschlossenen Raumes beeinträchtigt, wobei etwa dadurch, daß für die dem oberen Rand des obersten Torfeldes zugeordneten Gleitstücke oder Führungsrollen gesonderte Führungen, die in die Hauptführungen münden, vorgesehen werden, die Möglichkeit besteht, den Bogenanfang der Übergangsstücke unter den oberen Toröffnungsrand zu setzen, so daß die Führungsschienen mit ihren ins Rauminnere reichenden Schenkeln etwa in der Höhe des oberen Toröffnungsrandes verlaufen können.

Ein Tor nach dem Oberbegriff des Patentanpruches 1 ist aus der US-A-3 967 671 bekannt. Bei dieser Ausführung werden zur Bildung der einzelnen Torfelder Profilstangen oder -balken verwendet, die entsprechend der Breite der jeweiligen Toröffnung aus laufendem Strangmaterial abgeschnitten werden und an den Enden offen sind. Dabei sind keine Maßnahmen getroffen, um die Fugen zwischen aufeinanderfolgenden Torfeldern und die Fuge zwischen Torrahmenöffnung und geschlossenem Tor abzudichten. Die Profilstangen werden extrudiert und sind an den Außenoberflächen mit Deckschichten sowie an den Längsrändern mit versteifenden Metallprofilen ausgestattet. Die Außenhaut ist ein durch Glasfasern verstärktes Kunstharzlaminat, das nicht feuerbeständig ist.

Die FR-A-2 421 264 betrifft ein ähnliches Tor, bei dem die Füllung nur von einer Außenhaut umschlossen ist, die an den stoßenden Stirnseiten aus Dichtungsmaterial besteht. Man kann zwischen dem Rand der Toröffnung und dem Torfeld durchlaufende Dichtungen anbringen, um einen einigermaßen dichten Abschluß der Raumöffnung zu erzielen. Das Tor ist aber nicht feuerhemmend.

Bei einem sich gattungsmäßig von Sektionaltoren der eingangs genannten Art unterscheidenden Rolltor nach der AT-A-351 736 sind nur über einen ganz kleinen Bruchteil der Torhöhe reichende Lamellen vorhanden, die untereinander zusammenhängen, so daß dieses Rolltor auf einem oberhalb der Toröffnung angebrachten Wickelkörper aufgewickelt werden kann. Die einzelnen Lamellen bestehen aus tragenden, eine Außenhaut bildenden Blechteilen, deren Horizontalränder eingerollt sind, so daß sie die Lamellen untereinander verbindende Scharniere bilden. Innenseitig sind an diesen Blechteile von Deckblechen eingehüllte Isolierkörper bzw. Feuerdämmplatten angebracht, wobei zwischen den Horizontalrändern aufeinanderfolgender Lamellenkörper in Profilrinnen eingelegte Asbestschnüre zur Verbesserung der Dichtwirkung eingelegt sind. Das bei Feuerschutztüren vorhandene Problem einer ausreichenden Abdichtung zwischen Tor und Toröffnungsrand ist nicht gelöst. Ebensowenig ist im Brandfall die Formhaltigkeit der Lamellenbleche unter der Hitzeeinwirkung gewährleistet.

Aus der US-A-3 017 218 ist ein Rollbalkenverschluß für die Öffnungen von Waggons, Lastkraftwägen usw. bekannt, der aus einer durchgehenden flexiblen Innenbahr., eine Isolierfüllung mit abstandsweise angebrachten Querstegen uni einer unter Bildung von Einkerbungen angebrachten, aus einzelnen Blechlamellen zusammengesetzten Außenhaut aufgebaut ist.

Feuerhemmende Tore uni Brandschutztore, die tatsächlich den Anforderungen im Brandfall entsprechen, also für eine durch Normen festgelegte Standzeit der im Brandfall auftretenden Hitzeeinwirkung widerstehen können und dabei ausreichend gegen Rauchgasdurchtritt abdichten, werden bisher vorwiegend als Schwingflügeltore bzw. als Schiebetore gebaut. Ein entsprechendes, als Brandschutztor ausgebildetes Schwingflügeltor ist aus der DE-A-26 04 777 bekannt. Dabei wird für den Schwingflügel ein tragender Innenrahmen vorgesehen, der von einer ihrerseits von einer Außenhülle aus Metall abgedeckten Isolierfüllung überdeckt und damit längere Zeit vor Hitzeeinwirkunpen und vor Verziehen geschützt wird. Die Außenhülle besteht aus äußeren Verkleidungsblechen und einem diese einfassenden Außenrahmen. Die Verbindungselemente zwischen den isolierenden äußeren Deckplatten werden außerhalb des tragenden Innenrahmens geführt.

Es sind auch feuerhemmende Schiebetore bekannt. Sowohl bei Schwingflügeltoren als auch. bei Schiebetoren ist es bekannt, zwischen Torrahmen und Flügel an einem der beiden Teile oder an beiden Brandschutzlaminate anzubringen, die im Brandfall aufquellen und die Fuge zwischen Flügel und Torrahmen abdichten. Diese Tore haben gattungsbedingt einen großen Platzbedarf bzw. Stauraum für das Öffnen und Schließen und die Unterbringung der geöffneten Torflügel.

Aufgabe der Erfindung ist es ein Tor zu schaffen, das als feuerhemmendes Tor bzw. als Brandschutztor verwendet werden kann, ohne daß dabei auf die Vorteile der Ausbildung des Tores als Sektionaltor verzichtet wird. Eine Teilaufgabe besteht in der Schaffung eines die notwendigen Brandschutzeigenschaften aufweisenden Abschotungstores zur Unterteilung bzw. zum Abschluß größerer Laderäume von Transportfahrzeuger..

Die gestellte Aufgabe wird durch die Merkmale des Patentanspruches 1 gelöst.

Durch das Zusammenwirken aller dieser Merkmale wird sowohl eine ausreichende Stabilität der einzelnen Torfelder im Brandfall erzielt als auch erreicht, daß das gesamte Tor imBrandfall für die geforderte Standzeit der auftretenden Hitzeeinwirkung widerstehen kann, wobei Rauch- und Gasaustritt aus dem abgeschlossenen Raum verhindert wird. Die charniere werden vorzugsweise aus Stahl hergestellt, entsprechend kräftig werden auch die Laufrollen, Laufrollenachsen uni Führungsschienen dimensioniert. Da die Scharniere raumseitig aufgesetzt sind, können die Horizontalränder der einzelnen Felder über die ganze Dicke kündig stoßen. In diesem Bereich ist das Brandschutzlaminat vorgesehen, welches bei einer Erhitzung im Branfall aufquillt, die Stoßfuge abdichtet und überdiese die einzelnen Torfelder des geschlossenen Tores gegeneinander Verspannt, so daß diese Felder bei Brandwirkung festigkeitsmäßig eine Einheit bilden. Auch die Fuge zwischen den Außenrändern und dem Torrahmen wird gesichert, wobei das aufquellende Laminat im Brandfall aus den seiträndern der Torfelder herausquillt, sich mit dem quellenden Laminat vereinigt. und die Randfuge flammendicht und rauchhemmend abschließt. Überdies schützt das auellende Lamirat die veitlichen Torrär.der vor Hitze und Flammen. Die am Tor vorgesehenen Brandschutzlaminatstreifen werden während des Normalgebrauches gesichert untergebracht. Die Streifen können eingelegt oder eingeklebt werden.

Bevorzugte Ausführungen der Anordnung der Brandschutzlaminatstreifen entnimmt man den Ansprüchen 2 und 3. Bei der Ausführung nach Anspruch 3 bilden die Flansche Leitvorrichtungen für das aufquellende Brandschutzlaminat, so daß dieses im Brandfall den Raum zwischen den Torfeldseitenrändern und dem Flansch ausfüllt und die Randfuge des Tores abdichtet.

Durch eine Ausführung nach Anspruch 4 wird im Brandfall schon vor dem Wirksamwerden des erst bei der Erhitzung aufquellenden Brandschutzlaminates der Durchtritt von Rauch und sonstigen schädlichen Gasen durch das geschlossene Tor verhindert bzw. weitgehend eingeschränkt. Die Dichtungen z. B. Lippendichtungen werden im Brandfall zumindest in der ersten Zeit durch das quellende Laminat geschützt und verhindern ein nutzloses Abströmen dieses Laminats zur Toraußenseite.

Die erfindungsgemäße Ausgestaltung ermöglicht es, das Sektionaltor nicht nur an ortsfesten Anlagen, sondern auch an Transportfahrzeugen, vor allem bei Schienenfahrzeugen, Großtransportfahrzeugen für die Straße und auch im Schiffsbau einzusetzen. Dabei ergibt sich gegenüber einem einfachen, nicht feuerhemmenden Rolladen keine wesentliche Vergrößerung des Platzbedarfes. Eine vorteilhafte Anwendung ist in Anspruch 5 angegeben.

Bei einer Anwendung nach Anspruch 6 ergeben sich für diesen Fall besondere Vorteile. Eine rollende Fahrbahn bildende Schienentransportzüge weisen meist eine an den einzelnen Waggons oder sonstigen Zugelementen gelenkig unterteilte Fahrbahn auf, die aber zur Ermöglichung einer raschen Be und Entladung mit Kraftfahrzeugen über die Zuglänge durchgeht. Solche rollenden Fahrbahnen sind unter anderem für den Transport von Kraftfahrzeugen durch lange Tunnels bestimmt. Hier ist dafür Sorge zu tragen, daß bei einem an einem der transportierten Fahrzeuge auftretenden Brand dieser Brand nicht auf andere Fahrzeuge bzw. Abteile oder Waggons des Zuges übergreift. Bei dieser Anwendung kann man gemäß Anspruch 7 eine Fluchtmöglichkeit für sonst in einem- Abteil bzw. Abschnitt eingeschlossene Personen vorsehen.

Weiter Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen

Fig. 1 einen Teilschnitt durch ein Ende eines Torfeldes, die Führungsschienen und den Toröffnungsrand,

Fig. 2 den Sturzbereich der Toröffnung mit zwei im Schnitt dargestellten Torfeldern, wobei der besseren Übersichtlichkeit halber die oben und unten anschließenden weiteren Torfelder und die Führungsschienen weggelassen wurden,

Fig. 3 einen Einzelwaggon eines eine rollende Fahrbahn bildenen Schienentransportzuges mit erfindungsgemäßen Sektionaltoren als Abschotungstoren schematisch im längsschnitt und

Fig. 4 ein Abschotungstor schematisch in Vorderansicht, wobei eine Fluchttüre strichliert angedeutet wurde.

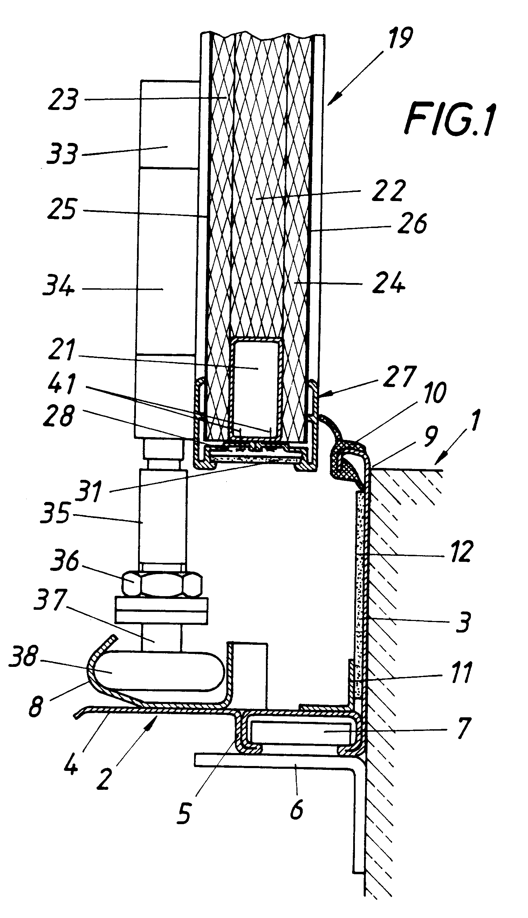

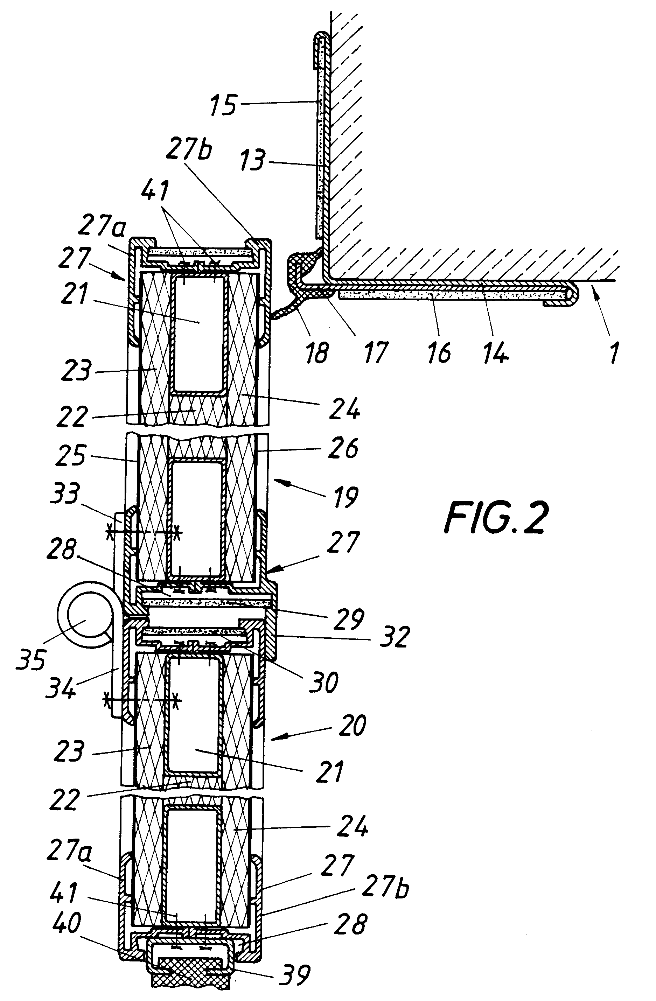

Nach Fig. 1 ist am seitlichen Innenrand einer Toröffnung 1 ein aus einem Faltprofil bestehendes Halteprofil 2 über die Höhe der Toröffnung durchgehend angebracht, welches Halteprofil 2 einen am inneren Öffnungsrand anliegenden Schenkel 3 und einen Innenflansch 4 aufweist, wobei aus dem Innenflansch durch Faltung ein Rinnenprofil 5 gebildet ist, mit dem das Faltprofil 2,an abstandweise angebrachten Tragstücken 6, die in die Rinne 5 eingreifende Köpfe 7 aufweisen, befestigt ist. Mit Abstand vom Schenkel 3 ist am Flansch 4 eine Führungsschiene 8 angebracht, die im Bereich des Torseitenrandes einen vertikal verlaufenden längsschenkel bildet und oberhalb des oberen Toröffnungsrandes mit einem bogenförmigen Übergangsstück in einen horizontal ins Rauminnere reichenden Schenkel übergeht, der das geöffnete Tor aufnimmt. Entsprechende Profile 2 und Führungsschienen 8 sind auch an der gegenüberliegenden Torseite angebracht. Der Schenkel 3 reicht über die innere Öffnungskante 9 des Tores hinaus und trägt eine lippendichtung 10. Ferner bildet der Schenkel 3 gemeinsam mit einem angesetzten Winkelprofil 11 eine Halterung für ein Brandschutzlaminat 12. Am Sturz (Fig. 2) der Toröffnung ist ein die innere Toröffnungskante umschließendes Winkelprofil angebracht, dessen Schenkel 13, 14 Halterungen für Brandschutzlaminatstreifen 15, 16 bilden, wobei ein vorstehender Lappen 17 wieder eine lippendichtung 18 trägt.

Das Tor selbst besteht aus mehreren Feldern 19, 20, die untereinander vorzugsweise gleich aufgebaut sind. Jedes Feld besitzt einen aus einem Stahlrohrprofil gebildeten Innenrahmen 21, der von einer Innenschicht 22 einer Isolierfüllung ausgefüllt und durch äußere Schichten 23, 24 einer Isolierfüllung abgedeckt wird. Außen sind die Schichten 23, 24 von Verkleidungsblechen 25, 26 abgedeckt, die von umlaufenden, aus Strangpreßprofilen 27a, 27b hergestellten Außenrahmen 27 zusammengehalten werden. Die Profile 27a, 27b bilden eine hinterschnittene Außennut 28, in die Brandschutzlaminate 29, 30, 31 eingesetzt sind. In der Horizontalfuge zwischen aufeinanderfolgenden Torfeldern 19, 20 wird manchmal auch mit einem der beiden Brandschutzlaminate 29 oder 30 das Auslangen gefunden. Die Profile 27a, 27b sind im Bereich der Nuten 28 mit von der Außenseite her anbringbaren Nieten 41 (sogenannten Poppnieten) am Innenrahmen 21 befestigt. In Fig. 1 wurde beim oberen Torfeld gezeigt, daß der untere Rahmenschenkel einen in der Schließstellung des Tores den oberen Außenrahmen des folgenden Feldes überlappenden Flansch 32 tragen kann. Es ist auch möglich, zwischen stossenden Seitenrändern nur eines der beiden Laminate 29 oder 30 anzubringen.

Die aufeinanderfolgenden Torfelder sind durch Scharniere verbunden, deren Scharnierlappen 33, 34 mit Schrauben an den Rahmen 21 befestigt werden. Die Scharnierachsen 35 sind über die Torseitenränder verlängert und tragen mit Hilfe von Schrauben 36 befestigte Achsen 37 für in den Schienen 8 geführte Laufrollen 38. Bei dem untersten Torfeld kann in die Nut 28 an Stelle des Laminates ein Halteprofil 39 eingesetzt sein, das ein Dichtungsprofil 40 oder ein hohles Fühlerprofil einer Berührungssicherung trägt.

Für den Antrieb des Tores kann, insbesondere wenn es sich um ein größeres Tor handelt, eine Motorwinde mit seitlich an den Torfeldern bzw. an den Achsen 5 angreifenden, über Rollen geführten Zugseilen Verwendung finden. Zusätzlich kann das Gewicht des Torflügels wenigstens teilweise durch Federn abgeglichen sein. Es ist möglich, den Torantrieb mit einer Steuereinrichtung zu versehen, die mit einem Rauch- oder Brandmelder verbunden ist und bei dessen Ansprechen den Torantrieb im Schließsinn einschaltet. Das Zeitspanne abschalten. Nach einer Variante enthält das hohle Profile 40 kann als Hohlprofil ausgebildet sein und Steuerkontakte enthalten, die bei der Berührung den Schließantrieb für die Dauer der Berührung bzw. für eine vorgewählte Profil 40 eine Luftfüllung und Druckfühler für diese Luftfüllung, die ebenfalls der Berührung des Profiles ansprechen und über die Steuereinrichtung den Schließantrieb abschalten.

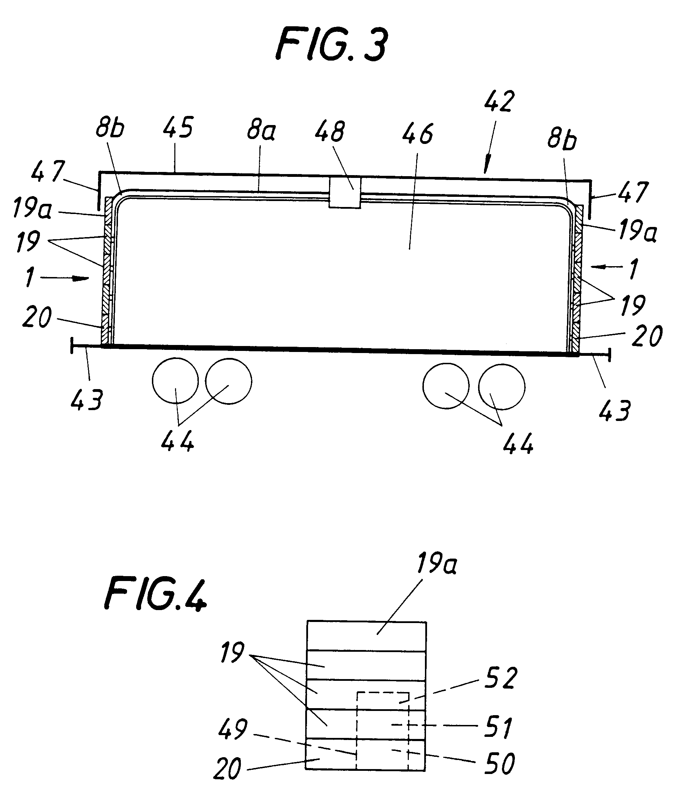

Fig. 3 zeigt einen Einzelwaggon 42 eines eine rollende Fahrbahn bildenden Schienentransportzuges, bei dem die Fahrbahnteile 43 der aufeinanderfolgenden Waggons gelenkig und überlappend ineinander übergehen. Die Fahrgestelle des Waggons 42 wurden nur durch ihre Räder 44 angedeutet. Für die Decke 45 und die Seitenwände 46 des Waggons werden feuer- und hitzebeständige Bauteile eingesetzt. Die Stirnseiten 47 des Einzelwaggons 42 sind mit Toröffnungen 1 versehen, für die als Abschotungstore Tore nach den Fig.1 und 2 Verwendung finden. Die Horizontalschenkel der Führungsschienen 8 wurden mit 8a, die bogenförmigen Übergangsstücke mit 8b bezeichnet. Für den oberen Rand des obersten Torfeldes 19a kann jeweils eine gesonderte in die Schiene 8a übergehende Führung vorgesehen sein, um einen möglichst geringen Abstand der Führungsschienenschenkel 8a von der Decke 45 zu ermöglichen.

Für die beiden Tore ist eine gemeinsame Antriebseinrichtung 48 angedeutet. Diese Antriebseinrichtung kann mit den Führungszapfen der Laufrollen 38 der untersten Torfelder 20 verbundene über nicht dargestellte Umlenkrollen geführt Seilzüge und auf die oberen Ränder der obersten Felder 19a wirkende hydraulische oder pneumatische Kolbentriebe umfassen, welche Kolbentriebe in der Schließstellung die oberen Felder 19a gegen den Innenrand der Teile 47 pressen. Im übrigen entsprechen die Tore in ihrem Aufbau dem Tor nach den Fig. 1 und 2. Bei der Ausführungsvariante nach Fig. 4 sind in die unteren Torfelder 19, 20 ein entsprechend dem Tor gelenkig unterteilter Rahmen und eine als Schwenkflügeltür ausgebildete Fluchttür 49 eingesetzt, die ebenfalls entsprechend der Felderteilung in Einzelfelder 50 bis 52 unterteilt ist und daher nur bei geschlossenem Tor geöffnet, sonst aber in sich ebenso wie ihr Rahmen mit den Torfeldern 19, 20 nach den Scharnieren 33 bis 35 bzw. eigenen Scharnieren auf den gleichen Scharnierachsen verschwenkt werden kann, um den Führungsschienen 8, 8a zu folgen. Zwischen den Außenrändern der Tür 49 und den Rahmenrändern werden wieder Brandschutzlaminate ein- oder beidseitig angebracht.

**Patentansprüche**

1. Sektionaltor mit über die Breite der Toröffnung (1) durchgehenden und über einen Bruchteil der Höhe der Toröffnung reichenden Torfeldern (19, 20), die eine von einer Auffenhülle (25 bis 27) umschlossene Isolierfüllung (22 bis 24) aufweisen, über raumseitig auf die Torfelder aufgesetzte Scharniere (33 bis 35) verbunden und mit Laufrollen (38) oder Gleitstücken in Führungsschienen (8) geführt sind, die neben den Seitenrändern der Toröffnung (1) verlaufende Längsschenkel (8) und mit bogenförmigen Übergangsstücken (8b) an diese anschließende, oberhalb des oberen Toröffnungsrandes ins Rauminnere reichende Schenkel (8a) aufweisen, dadurch gekennzeichnet, daß die Torfelder (19, 20) einen tragenden Innenrahmen (21) aufweisen, daß die Isolierfüllung (22 bis 24) hitzebeständig ausgebildet ist und den Innenrahmen (21) überdeckt, daß die Auffenhülle aus äußeren Verkleidungsblechen (25, 26) und einem die Verkleidungsbleche einfassenden Auffenrahmen (27) besteht, daß die Scharniere (33 bis 35) hitzebeständig ausgebildet und über durch die Verkleidungsbleche und die Isolierfüllung reichende Befestigungsbolzen an dem tragenden Innenrahmen (21) befestigt sind und daß in den bei geschlossenem Tor stoffenden Horizontalrändern der Felder (19, 20) durchgehende Einlagen (29, 30) aus einem Brandschutzlaminat angebracht und weitere Brandschutzlaminatstreifen (12, 15, 16, 31) zur Abschirmung der Torauffenränder vorgesehen sind, wobei die Seitenränder (27) der Torfelder (19, 20) Einlagen (31) aus einem Brandschutzlaminat aufnehmen und im Bereich der inneren Toröffnungsränder Halterungen (3, 11, 13, 14) für weitere, über die Ränder des geschlossenen Tores hinausreichende Brandschutzlaminatstreifen (12, 15, 16) angebracht sind.

2. Sektionaltor nach Anspruch 1, dadurch gekennzeichnet, daß die an den Torseitenrändern angebrachten Halterungen (3) für die Brandschutzlaminatstreifen (12) mit den Längsschenkeln (8) der Führungsschienen des Tores verbunden sind.

3. Sektionaltor nach Anspruch 2, dadurch gekennzeichnet, daß die Längsschenkel (8) der Führungsschienen für die um die Scharnierachsen (35) drehbaren Laufrollen (38) an mit Abstand von den Torfeldseitenrändern durchgehenden Tragflanschen (4) der Halteprofile (2) angebracht sind, wobei die Halteprofile (2) zwischen diesen Flanschen (4) und dem Toröffnungsrand (9) die Brandschutzlaminatstreifen (12) tragen.

4. Sektionaltor nach einem der Ansprüche 1 bis 3, dadurch gekennzeichnet, daß im Bereich der inneren Öffnungskanten der Toröffnung (1) neben den Brandschutzlaminatstreifen (3, 15, 16) Halterungen (17) für gegen das geschlossene Tor angestellte Dichtungen (10, 18) vorgesehen sind.

5. Sektionaltor nach einem der Ansprüche 1 bis 4, dadurch gekennzeichnet, daß das Tor (19, 20) als Laderaumtor eines Transportfahrzeuges (42) ausgebildet ist.

6. Sektionaltor nach Anspruch 5, dadurch gekennzeichnet, daß das Tor (19, 20) als Abschotungstor zur Unterteilung eines eine rollende Fahrbahn (43) bildenden Schienentransportzuges in einzelne Brandabschnitte (42) ausgebildet ist.

7. Sektionaltor nach Anspruch 6, dadurch gekennzeichnet, daß eine in der Höhe über mehrere Felder (19, 20) und in der Breite nur über einen bruchteil der Torbreite reichende, bei geschlossenem Tor zu öffnende Fluchttüre (49) vorgesehen ist.


**Claims**

1. A rolling shutter door having panels (19, 20) which are continuous over the width of the door opening (1), extend over a small proportion of the height of the door opening (1), have an insulating filling (22 - 24) enveloped in an outer sleeve (25 - 27), are interconnected by way of hinges (33 - 35) disposed on the panels on the premises side and are guided by way of rollers (38) or runners in guide rails (8), the same having longitudinal arms (8) which extend beside the side edges of the door opening (1) and into which arms (8a) merge by way of arcuate transitions (8b), the arms (8a) extending into the premises above the top edge of the door opening, characterised in that the door panels (19, 20) have an inner support frame (21), the insulating filling (22 - 24) is heat-resistant and covers the inner frame (21), the outer sleeve or envelope consists of outer cladding plates (25, 26) and an outer frame (27) in which the same are mounted, the hinges (33 - 35) are heat resistant and are secured to the inner support frame (21) by way of fixing pins which extend through the cladding plates and the insulating filling, and those horizontal edges of the panels (19, 20) which abut one another when the door is in the closed state receive continuous inserts (29, 30) made of a fire-protective laminate and further fire-protective laminate strips (12, 15, 16, 31) to protect the outside edges of the door, the side edges (27) of the panels (19, 20) receiving inserts (31) of a fire-protective laminate, while mountings (3, 11, 13, 14) for further fire-protective laminate strips (12, 15, 16) which extend beyond the edges of the closed door are provided near the inner door opening edges.

2. A door according to claim 1, characterised in that the mountings (3) for the strips (12) are connected to the longitudinal arms (8) of the guide rails of the door.

3. A door according to claim 2, characterised in that the longitudinal arms (8) of the guide rails for the rollers (38), the same being rotatable around the hinge pivots (35), are disposed on continuous support flanges (4) of the retaining section members (2), the flanges (4) being spaced apart from the door panel side edges, the retaining section members (2) supporting the fire-protective laminate strips (12) between the flanges (4) and the edge (9) of the door opening.

4. A door according to any of claims 1 to 3, characterised in that mountings (17) for seals (10, 18) engageable with the closed door are provided near the inner edges of the door opening (1) adjacent the fire-protective laminate strips (3, 15, 16).

5. A door according to any of claims 1 to 4, characterised in that the door (19, 20) is the loading door of a transport vehicle (42).

6. A door according to claim 5, characterised in that the door (19, 20) is a bulkhead door for subdividing into individual fire sections (42) a rail transport train forming a roll-on roll-off road (43).

7. A door according to claim 6, characterised in that an emergency door which extends over the height of a number of panels (19, 20) and over only a small portion of the width of the rolling shutter door and which is adapted to open when the latter door is in the closed state is provided.


**Revendications**

1. Porte segmentée avec des panneaux (19, 20) de porte qui, traversant en continu la largeur d'ouverture (1) de porte et s'étendant sur une fraction de la hauteur de l'ouverture de porte, présentent un garnissage isolant (22 à 24) emprisonné par une gaine extérieure (25 à 27), sont reliés par l'intermédiaire de charnières (33 à 35) apposées côté local sur les panneaux de porte et guidés dans des profilés (8) de guidage qui présentent des ailes longitudinales (8) s'étendant à côté des bords latéraux de l'ouverture (1) de porte et des ailes (8a) succédant aux premières par des éléments de transition (8b) incurvés et se prolongeant au-dessus du bord haut de l'ouverture de porte dans l'intérieur de l'enceinte, caractérisée par le fait que les panneaux (19, 20) de porte présentent un cadre intérieur (21) porteur, que le garnissage isolant (22 à 24) est réalisé de manière à résister à la chaleur et recouvre le cadre intérieur (21), que la gaine extérieure se compose de tôles d'habillage (25, 26) extérieures et d'un cadre extérieur (27) enserrant les tôles d'habillage, que les charnières (33 à 35) sont d'une réalisation résistant à la chaleur et sont fixées par l'intermédiaire de boulons de fixation sur le cadre porteur intérieur (21) en passant à travers les tôles d'habillage et le garnissage isolant, et que des garnitures (29, 30) continues, réalisées en un produit laminé pare-feu, sont insérées dans les bords horizontaux des panneaux (19, 20) qui, la porte fermée, se placent bord à bord, et que d'autres bandes de produit laminé pare-feu (12, 15, 16, 31) sont prévues pour faire écran sur les bords extérieurs de porte, tandis que les bords latéraux (27) des panneaux (19, 20) de porte abritent des garnitures (31) en un produit laminé pare-feu et que des supports de maintien (3, 11, 13, 14) sont prévus dans la zone des bords intérieurs de l'ouverture de porte pour d'autres bandes (12, 15, 16) de produit laminé pare-feu s'étendant au-delà des bords de la porte fermée.

2. Porte segmentée suivant la revendication 1, caractérisée par le fait que les supports (3) posés sur les bords latéraux de porte pour les bandes (12) de produit laminé pare-feu sont reliés aux ailes longitudinales (8) des profilés de guidage de la porte.

3. Porte segmentée suivant la revendication 2, caractérisée par le fait que les ailes longitudinales (8) des profilés de guidage pour les galets (38) de roulement pouvant tourner autour des axes (35) de charnière, sont fixées à des ailes (4) de retenue continues des profilés (2) de retenue passant à distance des bords latéraux des panneaux de porte, tandis qu'entre lesdites ailes (4) et le bord (9) de l'ouverture de porte, les profilés (2) de retenue portent les bandes (12) de produit laminé pare-feu.

4. Porte segmentée suivant l'une des revendications 1 à 3, caractérisée par le fait que dans la zone des arêtes intérieures de l'ouverture (1) de porte, des fixations (17) sont prévues à côté des bandes (3, 15, 16) de produit laminé pare-feu pour les joints (10, 18) s'appliquant contre la porte fermée.

5. Porte segmentée suivant l'une des revendications 1 à 4, caractérisée par le fait que la porte (19, 20) est réalisée comme porte du volume de chargement d'un véhicule (42) de transport.

6. Porte segmentée suivant la revendication 5, caractérisée par le fait que la porte (19, 20) est réalisée sous la forme d'une porte de cloisonnement servant à subdiviser un train de transport par rail constituant un train roulant de transport (43) en différents cantons pare-feu (42).

7. Porte segmentée suivant la revendication 6, caractérisée par le fait qu'il est prévu une porte (49) d'issue de fuite qui, devant être ouverte en cas de portail fermé, s'étend dans le sens de la hauteur sur plusieurs panneaux (19, 20) et dans le sens de la largeur sur une fraction seulement de la largeur du portail.

FIG.1

FIG.2

# FIG.3

# FIG.4